# FASCICULE DE BREVET EUROPEEN

(11) **EP 3 215 544 B1**
(45) Date de publication et mention de la délivrance du brevet: **23.01.2019**
(21) Numéro de dépôt: 15786903.3
(22) Date de dépôt: 22.10.2015
(51) Int. Cl.: C08C 19/40, C08C 19/24, C08C 19/06, C08F 136/08, C08L 15/00, C08F 8/40, B60C 1/00

(54) **PROCÉDÉ DE SYNTHÈSE D'UN POLYMÈRE PORTEUR DE GROUPEMENT HYDROXYARYLE, PRODUIT ISSU DE CE PROCÉDÉ ET COMPOSITION LE CONTENANT**
VERFAHREN ZUR SYNTHESE EINES POLYMERS MIT EINER HYDROXYARYLGRUPPE, MIT DIESEM VERFAHREN HERGESTELLTES PRODUKT UND ZUSAMMENSETZUNG DAMIT
METHOD FOR SYNTHESISING A POLYMER HAVING A HYDROXYARYL GROUP, PRODUCT OBTAINED USING SAID METHOD AND COMPOSITION CONTAINING SAME

(30) Priorité: 04.11.2014 FR 1460620
(43) Date de publication de la demande: 13.09.2017
(73) Titulaire: Compagnie Générale des Etablissements Michelin, 63000 Clermont-Ferrand (FR)
(72) Inventeur: RANNOUX, Claire, CH-1110, Morges (CH); MATMOUR, Rachid, F-63040 Clermont-Ferrand Cedex 9 (FR); LOUBAT, Cédric, F-34160 Castries (FR); CHATARD, Camille, F-34160 Castries (FR)
(74) Mandataire: Gandon-Pain, Sylvie
(86) Numéro de dépôt international: PCT/EP2015/074516
(87) Numéro de publication internationale: WO 2016/071120

(56) Documents cités:
- WO-A2-2011/002994
- DEROUET D ET AL: "Chemical modification of 1,4-polydienes by di(alkyl or aryl)phosphates", EUROPEAN POLYMER JOURNAL, PERGAMON PRESS LTD. OXFORD, GB, vol. 37, no. 7, 1 juillet 2001 (2001-07-01), pages 1297-1313, XP004249161, ISSN: 0014-3057, DOI: 10.1016/S0014-3057(00)00265-2 cité dans la demande

## Description

La présente invention concerne des polymères, en particulier élastomères, porteurs de groupements hydroxyaryle pendants ainsi que leur procédé de préparation. La présente invention concerne également les compositions de caoutchouc contenant de tels polymères en vue notamment d'une amélioration de la dispersion des charges au sein des polymères.

Dans le domaine de la fabrication des pneumatiques et en particulier de la formulation des compositions de caoutchouc en contact avec le sol, appelées bandes de roulement, on recherche en permanence des moyens pour améliorer la dispersion des charges au sein des polymères et ainsi améliorer les propriétés de renforcement de la composition de caoutchouc les contenant. L'un des moyens pour parvenir à ce résultat est l'utilisation d'agents de couplage capables d'établir des interactions entre le polymère et la charge. Un autre moyen pour y parvenir est d'utiliser des polymères dont la structure est modifiée dans le but d'obtenir une bonne interaction entre le polymère ainsi modifié et la charge, qu'il s'agisse du noir de carbone ou d'une charge inorganique renforçante.

La modification de la structure des polymères peut se faire par introduction d'une fonction réactive vis-à-vis de la charge, à tout moment de sa synthèse par divers moyens connus. Ainsi, la fonction peut être introduite dans la structure du polymère au moment de l'amorçage d'une polymérisation anionique, lorsque l'amorceur de polymérisation est porteur de cette fonction. La fonction sera portée en extrémité de chaîne à l'issue de la synthèse. La fonction peut également être introduite en extrémité de chaîne d'un polymère par réaction d'un polymère vivant avec un agent de fonctionnalisation. La fonction peut également être portée par un des monomères polymérisés.

Ce sont ces approches de modification auxquelles se sont intéressés les auteurs des demandes WO2009/086490 A2 et WO2011/002994 A2 pour introduire au moins un groupement hydroxyaryle au sein d'un élastomère diénique afin d'améliorer la dispersibilité de la charge renforçante dans une matrice élastomère.

En effet, WO2009/086490 A2 décrit une méthode pour synthétiser des polymères fonctionnalisés avec au moins un groupement aryle substitué par au moins une fonction OR, R étant hydrolysable. Le groupement aryle substitué peut être introduit lors de l'étape d'amorçage, lors de la polymérisation anionique ou lors de la terminaison (en choisissant des amorceurs, des monomères ou des agents de fonctionnalisation adaptés). WO2011/002994 A2 décrit une méthode pour synthétiser des polymères portant des groupements hydroxyaryle pendants. Cette méthode consiste à copolymériser par voie radicalaire des monomères comprenant au moins un co-monomère porteur du groupement hydroxyaryle protégé.

Toutefois, ces méthodes de synthèse ne permettent d'introduire qu'une seule fonction dans la structure du polymère, lorsque la fonctionnalisation opère à l'amorçage ou la terminaison de la polymérisation, à moins d'utiliser des amorceurs au moins difonctionnels ou des agents de couplage ou d'étoilage. Cette modification du polymère impose en outre la nécessité de préparer au préalable des amorceurs de polymérisation ou des agents de fonctionnalisation dont les groupements hydroxyaryle sont protégés. Il en résulte également une étape de déprotection supplémentaire à la fin du procédé de synthèse.

Par ailleurs, les modes de synthèse par copolymérisation permettant d'introduire plusieurs groupements hydroxyaryle pendants font appel à des co-monomères spécifiques portant le groupement hydroxyaryle. Là encore, la synthèse du polymère fonctionnel impose la nécessité de protéger les fonctions hydroxyle des groupements hydroxyaryle du co-monomère. La protection des fonctions hydroxyle du co-monomère rajoute une étape qui va de pair avec une autre étape à l'issue du procédé de synthèse, celle de déprotection des mêmes fonctions. De plus, les co-monomères porteurs d'un groupement hydroxyaryle sont peu, voire pas disponibles.

Pour avoir un réel bénéfice lié à la réactivité des groupements hydroxyaryle d'un polymère les comprenant en vue d'une modification significative de ses propriétés de renforcement, il apparait souhaitable d'avoir plusieurs groupements hydroxyaryle pendants.

Par conséquent, le problème technique qui se pose par rapport à l'art antérieur est de fournir un procédé qui permet la synthèse de polymère, notamment diénique portant un ou plusieurs groupements hydroxyaryle pendants qui pallie les inconvénients des procédés antérieurs.

La présente invention permet de résoudre ce problème en proposant un procédé de synthèse d'un polymère porteur d'un ou plusieurs groupements hydroxyaryle, lequel procédé permet d'introduire de manière simple et contrôlée un ou plusieurs groupements hydroxyaryle pendants, sans faire appel à des co-monomères porteurs d'un groupement hydroxyaryle qui ont notamment pour inconvénients de requérir des étapes supplémentaires de protection et déprotection de la fonction hydroxyle, et qui ne sont pas ou peu disponibles commercialement.

Ainsi, l'invention a pour objet un procédé de synthèse d'un polymère portant au moins un groupement hydroxyaryle pendant, lequel procédé comprend la réaction d'un polymère de départ portant au moins une fonction époxyde avec un composé nucléophile à la fois porteur du groupement hydroxyaryle et porteur d'une fonction nucléophile choisie dans le groupe constitué par la fonction acide phosphonique et sa forme ionique.

L'invention a également pour objet le polymère, en particulier élastomère, plus particulièrement élastomère diénique, porteur d'au moins un groupement hydroxyaryle pendant susceptible d'être obtenu par le procédé de synthèse conforme à l'invention.

Un autre objet de l'invention est une composition de caoutchouc à base au moins d'une charge renforçante et du polymère conforme à l'invention.

L'invention concerne aussi un pneumatique dont un de ses éléments constitutifs comprend la composition de caoutchouc conforme à l'invention.

### I. DESCRIPTION DETAILLEE DE L'INVENTION :

Dans la présente description, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).
Dans la présente description, on entend par l'expression "groupement hydroxyaryle" en référence au groupement porté par le composé nucléophile ou par le polymère, un groupement aryle portant au moins une fonction hydroxyle directement liée à un carbone du noyau benzénique, le groupement aryle étant substitué ou non sur au moins un autre carbone du noyau benzénique.

L'invention a donc pour objet un procédé de synthèse d'un polymère portant au moins un groupement hydroxyaryle pendant lequel procédé comprend la réaction d'un polymère de départ portant au moins une fonction époxyde avec un composé nucléophile.
Dans la présente description, on entend par « au moins un groupement » un ou plusieurs groupements.
Dans la présente description, on entend par « au moins une fonction » une ou plusieurs fonctions.

On entend par « fonction époxyde » le cycle à 3 membres formé par un atome d'oxygène et deux atomes de carbone, les atomes de carbone du cycle pouvant être substitués.

Selon l'invention, les deux atomes de carbone de la fonction époxyde sont dans la chaîne principale du polymère de départ ou bien la fonction époxyde est pendante, c'est-à-dire dans un groupement pendant de la chaîne du polymère de départ. Dans la présente description, l'expression « groupement pendant » s'entend selon la définition donnée par IUPAC, PAC, 1996, 68, 2287.

Dans la suite de l'exposé de l'invention, la dénomination « la fonction époxyde » est utilisée pour désigner l'au moins une fonction époxyde, c'est-à-dire une ou plusieurs fonctions époxyde.

Dans la suite de l'exposé de l'invention, la dénomination « le groupement hydroxyaryle » est utilisée pour désigner l'au moins un groupement hydroxyaryle, c'est-à-dire un ou plusieurs groupements hydroxyaryle.

Dans la suite de l'exposé de l'invention, la dénomination « le polymère de départ » désigne le polymère portant la fonction époxyde et utile aux besoins du procédé de synthèse conforme à l'invention.

Selon l'un quelconque des modes de réalisation de l'invention, de préférence la fonction époxyde est attachée à la chaîne polymère ailleurs qu'en extrémité de la chaîne polymère.

Selon l'un quelconque des modes de réalisation de l'invention, le polymère de départ porte de préférence plusieurs fonctions époxyde.

Selon l'un quelconque des modes de réalisation de l'invention, le polymère de départ peut être un élastomère, un polymère liquide ou un polymère thermoplastique, qu'il soit bloc, alterné ou statistique.

Dans la présente demande, on entend par polymère liquide un polymère qui à température ambiante (23°C) prend la forme du récipient qui le contient mais dont le volume est déterminé.

Une caractéristique essentielle du polymère de départ utile aux besoins du procédé de synthèse conforme à l'invention, est qu'il est porteur de la fonction époxyde. L'introduction de fonction époxyde dans une chaîne polymère peut être facilement accessible en une étape de synthèse. Il existe par exemple deux principes de synthèse différents. La fonction époxyde peut être apportée par au moins un des monomères constitutifs du polymère, ou par la modification post-polymérisation du polymère. De tels polymères portant une ou plusieurs fonctions époxyde et leurs procédés d'obtention sont bien connus de l'homme du métier et pour certains disponibles commercialement.

Selon une première alternative de l'invention, la (c'est-à-dire une ou plusieurs) fonction époxyde est pendante.

Selon une première variante de la première alternative de l'invention, le polymère portant la fonction époxyde pendante est un polymère au moins d'un premier monomère portant la fonction époxyde, de préférence une fonction époxyde. Il est bien entendu dans la présente invention que le premier monomère peut être un mélange de monomères portant la fonction époxyde, de préférence une fonction époxyde.

Selon la première variante, la synthèse du polymère portant la fonction époxyde pendante s'effectue de préférence par polymérisation radicalaire, selon des procédés classiques et connus de l'homme du métier, tels qu'en émulsion, en solution, en suspension ou en masse.

La polymérisation radicalaire est conduite à des températures variant de -10°C à 200°C, de préférence de 0 à 100°C, la température étant choisie par l'homme du métier en tenant compte notamment de la réactivité du milieu de polymérisation et de sa concentration.
L'amorceur de polymérisation peut être tout amorceur de polymérisation radicalaire conventionnel, notamment à titre d'exemple un peroxyde organique tel que le peroxyde de benzoyle, peroxyde de lauroyle, hydroperoxyde de tert-butyle, hydroperoxyde de cumyle, hydroperoxyde de para-menthyle, peroxyde de di-ter-butyle, peroxyde de dicumyle. Par ailleurs, les amorceurs de polymérisation radicalaire peuvent inclure également les peracides et leurs esters tels que l'acide peracétique et le persulfate de potassium. Chaque amorceur de polymérisation radicalaire peut être utilisé seul ou en combinaison avec au moins un autre amorceur de polymérisation radicalaire.
A titre de polymérisation radicalaire, on peut aussi recourir à la polymérisation radicalaire contrôlée qui permet un degré élevé de contrôle de la macrostructure et de la microstructure du polymère. La polymérisation radicalaire contrôlée est connue de l'homme de l'art et décrite dans de nombreux ouvrages. Parmi les polymérisations radicalaires contrôlées, on dénombre par exemple la polymérisation radicalaire par transfert d'atomes (Atom Transfer Radical en anglais, ATRP), la polymérisation radicalaire contrôlée par les nitroxides (Nitroxide Mediated Polymerization, NMP), la polymérisation radicalaire contrôlée par transfert de chaîne réversible par addition-fragmentation (Reversible Addition Fragmentation Transfer, RAFT).

Dans le milieu réactionnel de la polymérisation radicalaire, des agents de transfert comme les mercaptans, en particulier le tert-dodécylmercaptan, le n-dodécylmercaptan ou comme le tétrachlorure de carbone ou encore le di- ou triterpène peuvent également être utilisés seuls ou en combinaison.
Pour une polymérisation radicalaire conduite en émulsion, les tensioactifs employés dans la polymérisation en émulsion peuvent être anioniques, cationiques, non ioniques ou des espèces amphotères. Ils peuvent être utilisés seuls ou en combinaison.
Pour une polymérisation radicalaire conduite en suspension, les stabilisants employés dans la polymérisation en suspension peuvent être par exemple et de manière non exhaustive le poly(alcool vinylique), le poly(acrylate de sodium), l'hydroxyéthycellulose. Pour une polymérisation radicalaire, qu'elle soit en solution, en suspension, en masse ou en émulsion, les monomères, l'amorceur de polymérisation ainsi que les autres constituants du milieu de polymérisation peuvent être introduits dans le réacteur en une seule charge au début de la polymérisation ou de manière continue ou séquencée tout au long de la polymérisation.
La polymérisation radicalaire est réalisée de manière conventionnelle sous atmosphère inerte, par exemple sous azote ou sous argon. La durée typique de la polymérisation est comprise entre 15 min et 48h, plus communément entre 1 h et 24 h.

Selon un mode de réalisation de la première variante, le polymère portant la fonction époxyde pendante est un polymère au moins d'un premier monomère portant la fonction époxyde et d'un second monomère.

Le second monomère peut être un monomère vinylique choisi parmi l'éthylène, les α-oléfines, le (méth)acrylonitrile, les (méth)acrylates, les ester vinyliques d'acides carboxyliques, l'alcool vinylique, les éthers vinyliques et les mélanges de ces monomères.

A titre d'a-oléfines conviennent par exemple les α-monooléfines, les diènes conjugués et les diènes non-conjugués.

A titre de α-monooléfines, conviennent par exemple les alcènes et les composés vinylaromatiques (vinylarènes). A titre d'alcènes, on peut citer ceux ayant de 3 à 12 atomes de carbone, en particulier le propylène.

A titre de composés vinylaromatiques, on peut citer ceux ayant de 8 à 20 atomes de carbone, comme par exemple le styrène, l'ortho-, méta-, para-méthylstyrène, para-tertiobutylstyrène, alpha-méthylstyrène, le mélange commercial "vinyle-toluène", vinylmésitylène, le divinylbenzène et le vinylnaphtalène, préférentiellement le styrène.

A titre de diènes conjugués conviennent par exemple ceux ayant de 4 à 15 atomes de carbone, comme par exemple le 1,3-butadiène, le 2-méthyl-1,3-butadiène (isoprène), les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, préférentiellement le 1,3-butadiène, l'isoprène et leur mélange.

A titre de diènes non conjugués conviennent par exemple ceux ayant de 5 à 12 atomes de carbone, tel que notamment l'hexadiène-1,4, le vinyle norbornène, l'éthylidène norbornène, le norbornadiène et le dicyclopentadiène.

A titre de (méth)acrylonitrile, conviennent l'acrylonitrile et le méthacrylonitrile.

A titre de (méth)acrylates, c'est à dire acrylates ou méthacrylates, on peut citer les esters acryliques dérivés de l'acide acrylique ou de l'acide méthacrylique avec des alcools ayant 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'ethyl-2-hexyle, le méthacrylate de méthyle, le méthacrylate d'éthyle, le méthacrylate de n-butyle et le méthacrylate d'isobutyle.

A titre d'esters vinyliques d'acides carboxyliques, on peut citer par exemple l'acétate de vinyle et le propionate de vinyle, préférentiellement l'acétate de vinyle.

A titre d'éthers vinyliques conviennent par exemple ceux dont le groupement R' de la fonction éther OR' contient 1 à 6 atomes de carbone.

Selon un mode de réalisation préférentiel de la première variante, le second monomère est l'éthylène, le 1,3-butadiène, l'isoprène, un mélange de butadiène et d'isoprène ou le styrène.

Selon un mode de réalisation particulier de la première variante, le polymère portant la fonction époxyde pendante est un polymère au moins d'un premier monomère portant la fonction époxyde, d'éthylène ou d'une α-oléfine et d'un troisième monomère. Le troisième monomère est choisi parmi les monomères vinyliques tels que définis précédemment, sachant qu'il est distinct du second monomère. De préférence, le troisième monomère est un vinylester, en particulier l'acétate de vinyle, ou un alkylméthacrylate, l'alkyle ayant de 1 à 12 atomes de carbone, ou encore un composé vinylaromatique, en particulier le styrène.

Selon l'un quelconque des modes de réalisation de la première variante, le premier monomère portant la fonction époxyde est de préférence un monomère portant une fonction époxyde, de manière plus préférentielle un groupement glycidyle, de manière encore plus préférentielle un ester de glycidyle d'un acide carboxylique α,β-insaturé, mieux un ester de glycidyle de l'acide méthacrylique, de l'acide acrylique ou de l'acide itaconique.
Selon un mode de réalisation particulièrement préférentiel de la première variante, le polymère portant la fonction époxyde pendante est un terpolymère d'éthylène ou α-oléfine, d'acétate de vinyle et de (méth)acrylate de glycidyle ou un terpolymère d'éthylène ou α-oléfine, d'un (méth)acrylate d'alkyle, l'alkyle ayant 1 à 17 atomes de carbone et de (méth)acrylate de glycidyle. Comme terpolymère convient tout particulièrement le terpolymère d'éthylène, d'acétate de vinyle et de méthacrylate de glycidyle dont la synthèse est par exemple décrite dans la demande de brevet WO 2013192159.
A titre d'exemple de copolymères ou de terpolymères utiles aux besoins du procédé de synthèse conforme à l'invention en tant que polymère de départ, on peut citer par exemple les terpolymères commerciaux « Lotader » d'Arkema, en particulier le « Lotader AX8840 » et le « Lotader AX8900 ».
Selon une seconde variante de la première alternative de l'invention, le polymère portant la fonction époxyde pendante est obtenu par la modification post-polymérisation d'un polymère insaturé par un composé époxydé. On entend dans la présente demande par « polymère insaturé » un polymère qui comporte des doubles liaisons carbone-carbone. Le principe de la modification du polymère insaturé repose sur la réaction du composé époxydé avec au moins une double liaison carbone-carbone du polymère insaturé. Ces composés époxydés comprennent outre la fonction époxyde, un groupement réactif vis-à-vis d'une double liaison carbone-carbone par le biais de réactions connues de l'homme de l'art.
Comme réaction connue, on peut citer la réaction de Diels-Alder, le composé époxydé pouvant être le diène ou le diénophile. Dans le premier cas où le composé époxydé est le diène, le composé époxydé peut être un diène porteur d'une fonction époxyde. Dans le second cas où le composé époxydé diénophile est une monooléfine, le polymère insaturé à modifier contient des doubles liaisons carbone-carbone conjuguées. Des polymères contenant des doubles liaisons carbone-carbone conjuguées peuvent être obtenus par la polymérisation de monomères triènes, en particulier l'alloocimène, comme cela est décrit par exemple dans la demande EP 2 423 239 A1.

On peut également citer la réaction d'hydrosilylation d'un hydrogénosilane porteur d'une fonction époxyde, en particulier le (3-glycidoxypropyl)tétraméthyldisiloxane, comme cela est par exemple décrit dans la demande de brevet FR-A-3 015488.

On peut aussi citer la réaction de greffage radicalaire d'un thiol, le thiol portant une fonction époxyde, comme cela est décrit par exemple dans les publications suivantes : Angew. Chem. Int. Ed. 2010, 49, 1540-1573 ; J. Polym. Sci.: Part A: Polym. Chem. 2004, 42, 5301-5338 ; Polym. Chem., 2010, 1, 17-36; FR-A-3 000 073).

Le polymère insaturé peut avoir toute microstructure. Le polymère insaturé peut être par exemple à blocs, statistiques, séquencés, microséquencés, et être préparé en dispersion, en émulsion ou en solution ; il peut être couplé et/ou étoilé ou encore fonctionnalisé avec un agent de couplage et/ou d'étoilage ou de fonctionnalisation. Le polymère insaturé, en particulier diénique, peut être obtenu selon des techniques classiques de polymérisation (polymérisation anionique, polymérisation par catalyse de coordination, polymérisation radicalaire), bien connues de l'homme du métier.

Le polymère insaturé selon l'invention peut être choisi dans le groupe constitué par les polymères thermoplastiques, les polymères liquides, les élastomères et les mélanges de ces derniers.

Le polymère insaturé est préférentiellement un élastomère, plus préférentiellement un élastomère diénique.

Par élastomère diénique, on rappelle que doit être entendu un élastomère qui est issu au moins en partie (i.e. un homopolymère ou un copolymère) de monomères diènes (monomères porteurs de deux doubles liaisons carbone-carbone, conjuguées ou non). On entend plus particulièrement par élastomère diénique :
(a) tout homopolymère d'un monomère diène conjugué ayant de 4 à 12 atomes de carbone;
(b) tout copolymère d'un monomère diène conjugué, en particulier tout copolymère d'un monomère diène conjugué et d'une monooléfine telle que l'éthylène ou une α-monooléfine, le monomère diène conjugué ayant de 4 à 12 atomes de carbone;
(c) tout homopolymère d'un monomère diène non conjugué ayant de 5 à 12 atomes de carbone;
(d) tout copolymère d'un monomère diène non conjugué, en particulier tout copolymère d'un monomère diène non conjugué et d'une monooléfine telle que l'éthylène ou une α-monooléfine, le monomère diène non conjugué ayant de 5 à 12 atomes de carbone ;
(e) un mélange des polymères définis en (a) à (d).

Selon un mode de réalisation préférentiel de la seconde variante, le polymère insaturé est un élastomère diénique choisi dans le groupe constitué par les polybutadiènes, les polyisoprènes, les copolymères de butadiène, les copolymères d'isoprène et leurs mélanges.

Selon une deuxième alternative de l'invention, la (c'est-à-dire une ou plusieurs) fonction époxyde portée par le polymère de départ est dans la chaîne principale du polymère de départ. Selon cette alternative, les deux atomes de carbone de la fonction époxyde sont dans la chaîne principale du polymère de départ.

Selon un mode de réalisation de la deuxième alternative, le polymère de départ portant la fonction époxyde dans sa chaîne principale est un polymère contenant des unités 1,4-diéniques dont une partie est époxydée.

Les polymères contenant des unités 1,4-diéniques sont des polymères bien connus de l'homme du métier. Ils peuvent être obtenus par polymérisation anionique, par polymérisation radicalaire, par polymérisation amorcée par un catalyseur Ziegler Natta ou par un métallocène. Les unités 1,4-diéniques résultent de l'insertion d'un monomère 1,3-diène selon une insertion 1,4 dans la chaîne polymère. A titre de monomères 1,3-diènes conjugués conviennent par exemple ceux ayant de 4 à 15 atomes de carbone, comme par exemple le 1,3-butadiène, le 2-méthyl-1,3-butadiène (isoprène), les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, préférentiellement le 1,3-butadiène et l'isoprène.

Une unité 1,4-diénique époxydée peut être obtenue par époxydation de la double liaison présente dans l'unité 1,4-diénique. L'époxydation de doubles liaisons carbone-carbone, notamment présentes dans les unités 1,4-diéniques d'un polymère est une réaction bien connue de l'homme de l'art. L'époxydation peut être réalisée par des procédés à base de chlorohydrine ou de bromohydrine ou des procédés à base de peroxydes d'hydrogène, d'hydroperoxydes d'alkyles ou de peracides (tel que l'acide peracétique ou l'acide performique). Des polymères contenant des unités 1,4-diéniques époxydées sont disponibles commercialement, comme par exemple les polyisoprènes de synthèse époxydés ou des caoutchoucs naturels époxydés.
Selon un mode de réalisation préférentiel de la deuxième alternative, les unités 1,4-diéniques dont une partie est époxydée sont des unités 1,4-butadiéniques ou 1,4-isopréniques.

Selon un mode de réalisation davantage préférentiel de la deuxième alternative, le polymère de départ contenant des unités 1,4-diéniques dont une partie est époxydée résulte de l'époxydation d'un polymère choisi dans le groupe des polymères diéniques constitué par les polybutadiènes, les polyisoprènes, les copolymères de 1,3-butadiène, les copolymères d'isoprène et les mélanges de ces polymères.
Le polymère utilisé dans la réaction d'époxydation pour conduire au polymère de départ contenant des unités 1,4-diéniques dont une partie est époxydée peut être un élastomère, un polymère thermoplastique ou encore leur mélange. S'il s'agit d'un copolymère, il peut être statistique, alterné ou à bloc.
Selon l'un quelconque des modes de réalisation de l'invention, le polymère de départ qui contient la fonction époxyde peut être un élastomère ou un thermoplastique, qu'il soit à bloc, alterné ou statistique.

Le taux molaire de fonction époxyde dans le polymère de départ utile pour les besoins du procédé de synthèse conforme à l'invention peut varier dans une large part et est ajustée selon les propriétés recherchées du polymère conforme à l'invention, notamment selon l'usage qu'il en sera fait. Sauf indication contraire, il est exprimé par rapport à 100 moles d'unités monomères constituant le polymère de départ. Quand le taux molaire de fonction époxyde est inférieur ou égal à 0,1, et que le composé nucléophile porte un groupement hydroxyaryle, le taux molaire maximum de groupement hydroxyaryle pendant sur le polymère conforme à l'invention sera au plus de 0,1 mole pour 100 moles d'unités monomères constituant le polymère conforme à l'invention, ce qui implique que l'effet technique visé d'amélioration de la dispersion d'une charge renforçante au sein d'un polymère modifié risque d'être insuffisant. C'est pourquoi le taux molaire de fonction époxyde dans le polymère de départ est avantageusement d'au moins 0,1. De préférence il varie dans un domaine allant de 0,1 à 100 plus préférentiellement de 0,1 à 80 encore plus préférentiellement de 0,1 à 50, plus particulièrement de 0,1 à 20. Ces plages préférentielles du taux molaire de fonction époxyde peuvent s'appliquer à l'un quelconque des modes de réalisation de l'invention.

L'autre composé essentiel du procédé de synthèse de l'invention est un composé nucléophile. Le composé nucléophile est un composé porteur à la fois du groupement hydroxyaryle et d'une fonction nucléophile choisie dans le groupe constitué par la fonction acide phosphonique et sa forme ionique.

Selon un mode de réalisation préférentiel de l'invention, le groupement hydroxyaryle est un groupe aryle porteur de deux fonctions hydroxyle directement liées au noyau benzénique, de préférence vicinales. Par deux fonctions vicinales, on entend deux fonctions qui sont portées par des carbones du noyau benzénique qui sont adjacents. Autrement dit, une fonction hydroxyle est en position ortho par rapport à l'autre fonction hydroxyle.

On entend par fonction acide phosphonique le groupement -P(O)(OR)(OH), R étant H ou un groupe carboné préférentiellement alkyle, plus préférentiellement alkyle en C₁-C₁₂.

Selon l'un quelconque des modes de réalisation de l'invention, la fonction nucléophile est de préférence la fonction acide phosphonique, de manière plus préférentielle la fonction monoacide phosphonique, notamment -P(O)(OR)(OH), R étant un groupe carboné préférentiellement alkyle, plus préférentiellement alkyle en C₁-C₁₂.

La fonction nucléophile est susceptible de réagir avec la fonction époxyde du polymère de départ par ouverture du cycle époxyde. Le composé nucléophile répond à la formule (I) suivante:

A-B-X (I)

dans laquelle :
A représente une fonction nucléophile choisie dans le groupe constitué par la fonction acide phosphonique et sa forme ionique,
B est un "espaceur" représentant un atome ou un groupe d'atomes formant une liaison entre A et X,
X représente un groupe aryle porteur de 1 à 5 fonctions hydroxyle directement liées au noyau benzénique, lequel noyau peut être par ailleurs autrement substitué ou non.

Le groupement B permet de relier le groupement A et le groupement X. De préférence, le groupement B est une chaîne hydrocarbonée divalente, linéaire, ramifiée ou cyclique. Ladite chaîne peut être substituée ou interrompue par au moins un hétéroatome, tel qu'un oxygène, pour autant qu'elle ne constitue pas alors un groupement nucléophile réactif vis-à-vis de la fonction époxyde. Selon l'un quelconque des modes de réalisation de l'invention, la chaîne hydrocarbonée, linéaire, ramifiée ou cyclique, en particulier alkylène, est préférentiellement en C₂-C₂₀, plus préférentiellement en C₂-C₁₅. Selon l'un quelconque des modes de réalisation de l'invention, ladite chaîne peut être interrompue par une fonction oxycarbonyle.

X peut être représenté par la formule (II) suivante : 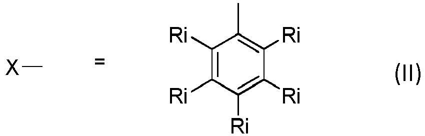 dans laquelle, les Ri, identiques ou différents, représentent un atome d'hydrogène ou une fonction hydroxyle, l'un au moins des Ri représentant une fonction hydroxyle.

Selon un mode de réalisation préférentiel de l'invention, le groupe aryle X est substitué par deux fonctions hydroxyle, de préférence vicinales.

Selon un mode de réalisation, deux Ri représentent chacun une fonction hydroxyle, les autres Ri représentant chacun un atome d'hydrogène.

Selon un autre mode de réalisation de l'invention le composé nucléophile répond à la formule A-B-X pour laquelle X représente un groupement aryle substitué sur deux atomes de carbone voisins par deux fonctions hydroxyle.

Selon ce mode de réalisation, le groupement X- répond de préférence à la formule (III) :

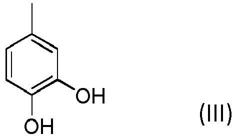

Selon l'un quelconque des modes de réalisation de l'invention, le composé nucléophile répond de manière préférentielle à la formule (IV):

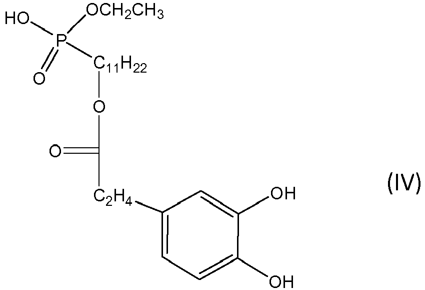

La réaction du polymère de départ portant la fonction époxyde avec le composé nucléophile peut s'effectuer en masse ou en solution, de préférence en solution. La réaction peut être menée dans les conditions réactionnelles décrites par Derouet et al. dans Eur. Polym. J. 2001, 37, 1297-1313 qui mettent en oeuvre la réaction d'un caoutchouc naturel époxydé et d'un composé portant une fonction acide phosphonique, mais dépourvue d'un groupement hydroxyaryle.

Typiquement, pour réaliser la réaction du polymère de départ portant la fonction époxyde, avec le composé nucléophile, on met en solution le polymère de départ et le composé nucléophile dans un solvant apolaire. A titre de solvant apolaire, on peut citer les solvants hydrocarbonés tels qu'un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène, ainsi que leurs mélanges. On utilise préférentiellement le méthylcyclohexane ou le toluène. La quantité de solvant est ajustée par l'homme du métier en fonction de la viscosité de la solution du milieu réactionnel, de la solubilité respective du polymère de départ et du composé nucléophile dans le solvant. Typiquement, elle est ajustée de façon à avoir une concentration massique en polymère de départ comprise entre 1 et 40%, de préférence entre 2 et 20%, de manière plus préférentielle entre 2 et 10% dans la solution comprenant le polymère de départ et le composé nucléophile.

L'introduction du groupement hydroxyaryle par une réaction post-polymérisation sur un polymère portant la fonction époxyde permet d'éviter les étapes de protection et déprotection nécessaires lorsqu'on copolymérise à partir d'un monomère portant le groupement hydroxyaryle. En outre, le rendement élevé, qui peut atteindre au moins 90%, de l'ouverture des cycles époxyde permet un parfait contrôle du taux de groupement hydroxyaryle pendant introduit.

Selon un mode de réalisation préférentiel de l'invention, le procédé conforme à l'invention conduit à la synthèse d'un polymère conforme à l'invention qui contient un ou plusieurs groupements hydroxyaryle pendants.

L'invention a également pour objet le polymère porteur d'un ou plusieurs groupements hydroxyaryle pendants, lequel polymère est susceptible d'être obtenu par le procédé conforme à l'invention selon l'un quelconque de ses modes de réalisation décrits précédemment. Le polymère conforme à l'invention peut être un élastomère, un polymère liquide ou un polymère thermoplastique, qu'il soit bloc, alterné ou statistique. De préférence, le polymère conforme à l'invention est un élastomère, mieux un élastomère diénique.

Le polymère conforme à l'invention comprend d'une part une chaîne principale dérivée d'un polymère portant la fonction époxyde, d'autre part au moins un groupement latéral porteur du groupement hydroxyaryle, lequel groupement hydroxyaryle est relié à la chaîne principale par l'intermédiaire de groupement divalent résultant de la réaction de la fonction époxyde avec le composé nucléophile.

Selon l'un quelconque des modes de réalisation de l'invention, le taux de groupement hydroxyaryle pendant va de préférence de 0,1 à 100, plus préférentiellement de 0,1 à 80, encore plus préférentiellement de 0,1 à 50, plus particulièrement de 0,1 à 20 moles pour 100 moles d'unités monomères constituant le polymère conforme à l'invention.

Selon l'un quelconque des modes de réalisation de l'invention, la chaîne principale du polymère conforme à l'invention contient de préférence des unités monomères choisis dans le groupe constitué par les unités éthylène, les unités α-oléfine, les unités (méth)acrylonitrile, les unités (méth)acrylate, les unités ester vinylique d'acides carboxyliques, les unités alcool vinylique, les unités éther vinylique. A titre d'unités α-oléfine, on peut citer les α-monooléfines comme les composés vinylaromatiques comme le styrène, les diènes conjugués comme le 1,3-butadiène et l'isoprène, les diènes non-conjugués.

Selon l'un quelconque des modes de réalisation de l'invention, le polymère conforme à l'invention répond de préférence à la formule (V):

P [-G]i (V)

dans laquelle :
- P représente la chaîne polymère dérivée du polymère portant la fonction époxyde,
- G représente le groupement latéral porteur du groupement hydroxyaryle, et
- i représente le nombre de groupement hydroxyaryle pendant.

L'homme du métier comprendra que cette chaîne polymère du polymère conforme à l'invention peut comprendre des fonctions époxyde résiduelles. Le taux de ces fonctions époxyde résiduelles dépend notamment de la stoechiométrie des réactifs, en particulier de la quantité introduite dans le milieu réactionnel de composé nucléophile relative au taux molaire de fonction époxyde présente sur le polymère de départ. i dépend du rendement de la réaction de greffage, du taux molaire de fonction époxyde dans le polymère de départ, ainsi que de la quantité de composé nucléophile. C'est un nombre au moins égal à 1. Selon l'un quelconque des modes de réalisation de l'invention, i est strictement supérieur à 1.

Selon l'un quelconque des modes de réalisation de l'invention, G est représenté de préférence par la formule (VI):

-D-B-X (VI)

dans laquelle :
D représente un groupement divalent résultant de la réaction de la fonction époxyde du polymère de départ avec la fonction nucléophile A du composé nucléophile;
A, B et X sont tels que décrit plus haut.

Ainsi, D peut être le groupement divalent résultant de la réaction de la fonction époxyde du polymère de départ avec une fonction nucléophile choisie dans le groupe constitué par la fonction acide phosphonique et sa forme ionique, de préférence avec la fonction acide phosphonique.

De préférence, D est le groupement divalent résultant de la réaction de la fonction époxyde avec une fonction nucléophile choisie dans le groupe constitué par la fonction acide phosphonique et sa forme ionique, de préférence avec la fonction acide phosphonique. Plus particulièrement, D peut être le groupement divalent résultant de la réaction de la fonction époxyde d'une unité 1,4-diénique époxydée, préférentiellement d'une unité 1,4-butadiène époxydée ou d'une unité 1,4-isoprène époxydée, avec une fonction nucléophile choisie dans le groupe constitué par la fonction acide phosphonique et sa forme ionique, de préférence avec la fonction acide phosphonique.

Les polymères porteurs d'un ou plusieurs groupements hydroxyaryle pendants selon l'invention, peuvent être utilisés en tant que tel ou en mélanges avec un ou plusieurs autres composés. La présence de groupements hydroxyaryle pendants permet d'envisager une utilisation dans des applications similaires à celles des polymères modifiés en général, et des polymères porteurs de groupements hydroxyaryle en particulier. Par exemple, il est connu pour l'optimisation des interactions entre un élastomère diénique et une charge renforçante au sein d'une composition de caoutchouc, de modifier la nature des élastomères diéniques afin d'y introduire des groupes fonctionnels. Ainsi, la structure particulière du polymère porteur d'un ou plusieurs groupements hydroxyaryle selon l'invention permet d'envisager son utilisation dans la fabrication de divers produits à base de caoutchouc renforcé lorsque le polymère est un élastomère diénique, notamment en vue d'améliorer la dispersion de la charge au sein de la matrice élastomère.

Un autre objet de l'invention est donc une composition de caoutchouc à base au moins d'une charge renforçante et du polymère conforme à l'invention qui est préférentiellement un élastomère, plus préférentiellement un élastomère diénique.

L'élastomère diénique portant un ou plusieurs groupements hydroxyaryle pendants est alors plus particulièrement choisi parmi les polybutadiènes, les polyisoprènes, les copolymères de butadiène, les copolymères d'isoprène, ainsi que leurs mélanges. A titre d'élastomère diénique conviennent par exemple les SBR, les BIR, les SIR, les SBIR, les copolymères de butadiène et d'ester d'acide (méth)acrylique, les copolymères d'isoprène et d'ester d'acide (méth)acrylique, les copolymères de butadiène, de styrène et d'ester d'acide (méth)acrylique, les copolymères d'isoprène, de styrène et d'ester d'acide (méth)acrylique.

La composition de caoutchouc conforme à l'invention a pour caractéristique de comprendre une charge renforçante par exemple du noir de carbone, une charge renforçante autre que du noir de carbone, notamment de type siliceuse telle que de la silice à laquelle est associé de manière connue un agent de couplage, ou encore un mélange de ces deux types de charge.

Selon des variantes de l'invention, la composition peut, outre le polymère conforme à l'invention, comprendre au moins un élastomère diénique conventionnel.

Comme élastomère diénique conventionnel conviennent plus particulièrement le caoutchouc naturel, les polybutadiènes (BR), les copolymères de butadiène, les polyisoprènes (IR), les copolymères d'isoprène et les mélanges de ces élastomères. De tels copolymères sont plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'isoprène et d'un monomère vinylaromatique, plus particulièrement le copolymère d'isoprène-styrène (SIR) et les copolymères d'isoprène-butadiène-styrène (SBIR).

L'élastomère diénique conventionnel peut être étoilé, couplé, fonctionnalisé ou non, de manière connue en soi, au moyen d'agents de fonctionnalisation, de couplage ou d'étoilage connus de l'homme de l'art.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des agents de protection, des agents anti-fatigue, des plastifiants, des résines renforçantes, des donneurs de méthylène (par exemple HMT ou H3M), un système de réticulation et les mélanges de tels composés.

Dans le domaine des pneumatiques, notamment pour véhicules, l'utilisation d'une telle composition de caoutchouc est particulièrement appropriée. C'est pourquoi un pneumatique dont un de ses éléments constitutifs comprend une composition de caoutchouc à base d'un élastomère diénique portant au moins un groupement hydroxyaryle pendant conforme à l'invention constitue également un objet de l'invention.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### ll.1-Mesures utilisées :

### II.1.1-Résonance Magnétique Nucléaire (RMN) :

La détermination de la microstructure des polymères, notamment le taux des différentes unités monomères dans les polymères sont réalisées par analyse RMN. Les analyses RMN ¹H sont réalisées avec un Spectromètre Bruker Avance 300 (300 MHz), sonde QNP 1H, 31P, 19F et 13C. Les échantillons sont solubilisés dans le chloroforme deutéré (CDCl3).

### II.1.2-Chromatographie d'exclusion stérique (SEC) :

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE.

Préparation du polymère: Il n'y a pas de traitement particulier de l'échantillon de polymère avant analyse. Celui-ci est simplement solubilisé, dans du (tétrahydrofuranne + 1%vol. de diisopropylamine + 1%vol. de triéthylamine + 0,1%vol. d'eau distillée), à une concentration d'environ 1 g/l. Puis la solution est filtrée sur filtre de porosité 0,45µm avant injection.

Analyse SEC: L'appareillage utilisé est un chromatographe « WATERS alliance ». Le solvant d'élution est du tétrahydrofurane + 1%vol. de diisopropylamine + 1%vol. de triéthylamine selon le solvant utilisé pour la mise en solution du polymère. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### 11.2-Préparation de polymères portant des groupements époxydes :

### Exemple 1 : Epoxydation du polyisoprène LIR 30000 au MCPBA

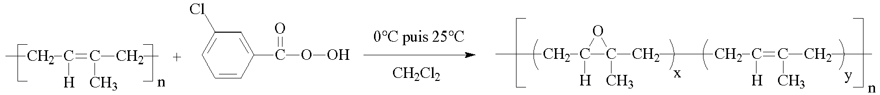

Dans un ballon bicol sont introduits 50 g de LIR 30000 et 300 mL de dichlorométhane. Le mélange est placé sous agitation à 0°C ; 8.22 g d'acide métachloroperbenzoïque en solution dans 75 mL de chloroforme sont alors introduits goutte à goutte à l'aide d'une ampoule de coulée. Le mélange est ensuite laissé sous agitation à température ambiante pendant 4h. En fin de réaction, le copolymère est précipité deux fois dans 2 litres d'éthanol, puis solubilisé dans le dichlorométhane. Le solvant est alors totalement éliminé par évaporation sous vide. Le produit final est un liquide visqueux translucide obtenu avec un rendement de 96%. Il est analysé en RMN¹H.

Le spectre RMN¹H permet de quantifier la microstructure au sein du copolymère par intégration de signaux caractéristiques des protons 1 et 2 qui apparaissent sous forme de massifs :

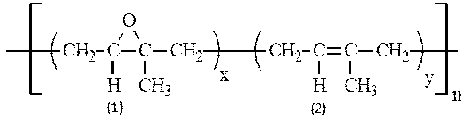

| Proton N° | Déplacement chimique (ppm) | Nombre de protons |
|---|---|---|
| H2 | 2.72 | 1 |
| H1 | 4.64-5.28 | 1 |

La composition molaire du copolymère est la suivante : 4.1%mol d'époxyde et 95.9%mol d'isoprène. La masse molaire du copolymère est de 30210 g/mol. Il y a environ 18 fonctions époxyde par chaîne.

### II.3-Préparation de polymères portant des groupements hydroxyaryles pendants le long de la chaîne :

### Exemple 2 :

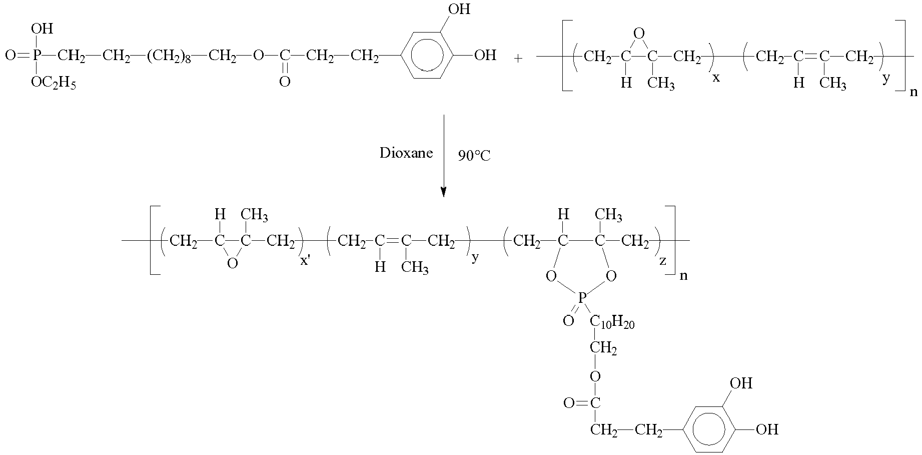

Dans un ballon monocol sont introduits 18 g de polyisoprène époxydé, 4.82 g de 11-[éthoxy(hydroxy)phosphoryl]undécyl 3-(3,4-dihydroxyphényl)propanoate et 50 mL de dioxane. Le milieu réactionnel est mis sous agitation magnétique et chauffé à 90°C pendant 24 heures. En fin de réaction, le terpolymère est précipité deux fois dans le méthanol, puis solubilisé dans le dichlorométhane. Le solvant est alors totalement éliminé par évaporation sous vide. Le produit final est un polymère jaune translucide obtenu avec un rendement de 91%. Il est analysé en RMN¹H et ³¹P.

Le spectre RMN¹H permet de quantifier la microstructure au sein du copolymère par intégration de signaux caractéristiques des protons 1 à 9 qui apparaissent sous forme de massifs :

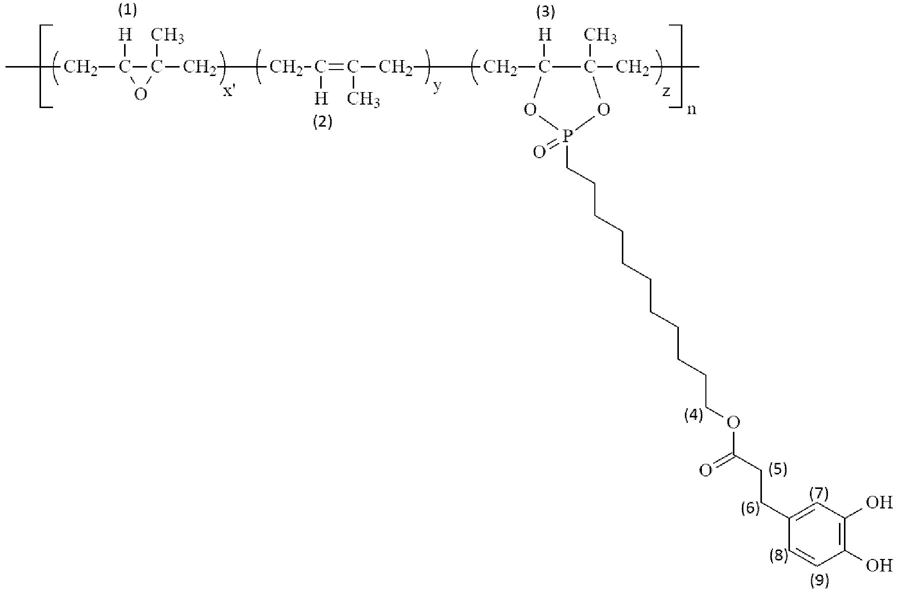

| Proton N° | Déplacement chimique (ppm) | Nombre de protons |
|---|---|---|
| H5 | 2.59 | 2 |
| H1 | 2.72 | 1 |
| H6 | 2.84 | 2 |
| H4 | 4.08 | 2 |
| H3 | 4.33 | 1 |
| H2 | 4.64-5.28 | 1 |
| H7 H8 H9 | 6.54-6.84 | 3 |

Le spectre RMN³¹P permet d'observer le signal caractéristique du phosphore greffé à 47.7 ppm.

La composition molaire du terpolymère est la suivante : 96.5%mol d'isoprène, 2,5%mol de catéchol et 1%mol d'époxyde résiduel. La masse molaire du copolymère est de 35070 g/mol. Il y a environ 11 fonctions catéchol par chaîne.

## Revendications

1. Procédé de synthèse d'un polymère portant au moins un groupement hydroxyaryle pendant, lequel procédé comprend la réaction d'un polymère de départ portant au moins une fonction époxyde avec un composé nucléophile à la fois porteur du groupement hydroxyaryle et porteur d'une fonction nucléophile choisie dans le groupe constitué par la fonction acide phosphonique et sa forme ionique.

2. Procédé selon la revendication 1, dans lequel le groupement hydroxyaryle est un groupe aryle porteur de deux fonctions hydroxyle directement liées au noyau benzénique, de préférence vicinales.

3. Procédé selon la revendication 1 ou 2 dans lequel la fonction nucléophile est la fonction monoacide phosphonique, préférentiellement le groupe -P(O)(OR)(OH), R étant un groupe carboné.

4. Procédé selon l'une quelconque des revendications 1 à 3, dans lequel le composé nucléophile répond à la formule (I) suivante:
A-B-X (I)
dans laquelle:
A représente une fonction nucléophile choisie dans le groupe constitué par la fonction acide phosphonique et sa forme ionique,
B est un "espaceur" représentant un atome ou un groupe d'atomes formant une liaison entre A et X,
X représente un groupe aryle porteur de 1 à 5 fonctions hydroxyle directement liées au noyau benzénique.

5. Procédé selon la revendication 4, dans lequel X dans la formule (I) représente 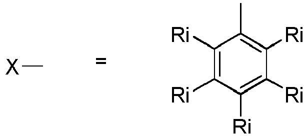 dans laquelle les Ri, identiques ou différents, représentent un atome d'hydrogène ou une fonction hydroxyle, l'un au moins des Ri représentant une fonction hydroxyle, de préférence deux Ri représentent chacun une fonction hydroxyle, les autres Ri représentant chacun un atome d'hydrogène.

6. Procédé selon la revendication 5, dans lequel X dans la formule (I) représente :

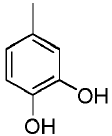

7. Procédé selon l'une quelconque des revendications 1 à 6 dans lequel les deux atomes de carbone de la fonction époxyde sont dans la chaîne principale du polymère de départ.

8. Procédé selon la revendication 7, dans lequel le polymère de départ contient des unités 1,4-diéniques dont une partie est époxydée.

9. Procédé selon la revendication 8 dans lequel le polymère de départ contenant des unités 1,4-diéniques dont une partie est époxydée résulte de l'époxydation d'un polymère choisi dans le groupe des polymères diéniques constitué par les polybutadiènes, les polyisoprènes, les copolymères de 1,3-butadiène, les copolymères d'isoprène et les mélanges de ces polymères.

10. Procédé selon l'une quelconque des revendications 1 à 6 dans lequel la fonction époxyde est pendante.

11. Procédé selon la revendication 10, dans lequel le polymère de départ est un polymère au moins d'un premier monomère portant la fonction époxyde.

12. Procédé selon la revendication 11, dans lequel le polymère de départ est un polymère au moins d'un premier monomère portant la fonction époxyde et d'un second monomère, préférentiellement un monomère vinylique choisi parmi :
- l'éthylène,
- les α-oléfines,
- le (méth)acrylonitrile,
- les (méth)acrylates,
- les ester vinyliques d'acides carboxyliques,
- l'alcool vinylique,
- les éthers vinyliques,
- et les mélanges de ces monomères.

13. Procédé selon l'une quelconque des revendications 1 à 12, dans lequel le taux de fonction époxyde dans le polymère de départ est d'au moins 0,1 mole pour 100 moles d'unités monomères constituant le polymère de départ.

14. Polymère portant au moins un groupement hydroxyaryle pendant susceptible d'être obtenu par le procédé de synthèse défini selon l'une quelconque des revendications 1 à 13.

15. Polymère selon la revendication 14, lequel polymère est un élastomère, de préférence un élastomère diénique.

16. Composition de caoutchouc à base au moins d'une charge renforçante et d'un polymère défini selon l'une quelconque des revendications 14 à 15.

17. Pneumatique dont un de ses éléments constitutifs comprend une composition de caoutchouc selon la revendication 16.

## Patentansprüche

1. Verfahren zur Synthese eines Polymers mit mindestens einer seitenständigen Hydroxyarylgruppe, bei dem man ein Ausgangspolymer mit mindestens einer Epoxidfunktion mit einer nucleophilen Verbindung, die gleichzeitig die Hydroxyarylgruppe und eine nucleophile Funktion aus der Gruppe bestehend aus der Phosphonsäurefunktion und ihrer ionischen Form trägt, umsetzt.

2. Verfahren nach Anspruch 1, bei dem es sich bei der Hydroxyarylgruppe um eine Arylgruppe mit zwei direkt an den Benzolkern gebundenen Hydroxylfunktionen, die vorzugsweise vicinal sind, handelt.

3. Verfahren nach Anspruch 1 oder 2, bei dem es sich bei der nucleophilen Funktion um eine einbasige Phosphonsäurefunktion, vorzugsweise die Gruppe -P(O)(OR)(OH), handelt, wobei R für eine kohlenstoffbasierte Gruppe steht.

4. Verfahren nach einem der Ansprüche 1 bis 3, bei dem die nucleophile Verbindung der folgenden Formel (I) entspricht:
A-B-X (I)
in der:
A für eine nucleophile Funktion aus der Gruppe bestehend aus der Phosphonsäurefunktion und ihrer ionischen Form steht,
B ein "Spacer" ist, der für ein Atom oder eine Gruppe von Atomen, das bzw. die eine Bindung zwischen A und X bilden bzw. binden, steht
X für eine Arylgruppe mit 1 bis 5 direkt an den Benzolkern gebundenen Hydroxylfunktionen steht.

5. Verfahren nach Anspruch 4, bei dem X in der Formel (I) für 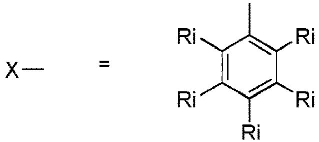 steht, wobei die Variablen Ri gleich oder verschieden sind und für ein Wasserstoffatom oder eine Hydroxylfunktion stehen, wobei mindestens eine der Variablen Ri für eine Hydroxylgruppe steht, vorzugsweise zwei Ri jeweils für eine Hydroxylfunktion stehen, wobei die anderen Variablen Ri jeweils für ein Wasserstoffatom stehen.

6. Verfahren nach Anspruch 5, bei dem X in der Formel (I) für 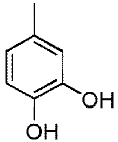 steht.

7. Verfahren nach einem der Ansprüche 1 bis 6, bei dem sich die beiden Kohlenstoffatome der Epoxidfunktion in der Hauptkette des Ausgangspolymers befinden.

8. Verfahren nach Anspruch 7, bei dem das Ausgangspolymer 1,4-Dien-Einheiten, die teilweise epoxidiert sind, enthält.

9. Verfahren nach Anspruch 8, wobei sich das teilweise epoxidierte 1,4-Dien-Einheiten enthaltende Ausgangspolymer aus der Epoxidation eines Polymers aus der Gruppe von Dienpolymeren bestehend aus Polybutadienen, Polyisoprenen, 1,3-Butadien-Copolymeren, Isopren-Copolymeren und Mischungen dieser Polymere ergibt.

10. Verfahren nach einem der Ansprüche 1 bis 6, bei dem die Epoxidfunktion seitenständig ist.

11. Verfahren nach Anspruch 10, bei dem es sich bei dem Ausgangspolymer um ein Polymer von mindestens einem ersten Monomer, das die Epoxidfunktion trägt, handelt.

12. Verfahren nach Anspruch 11, bei dem es sich bei dem Ausgangspolymer um ein Polymer von mindestens einem ersten Monomer, das die Epoxidfunktion trägt, und einem zweiten Monomer, vorzugsweise einem Vinylmonomer, das aus
- Ethylen,
- α-Olefinen,
- (Meth)acrylnitril,
- (Meth)acrylaten,
- Vinylestern von Carbonsäuren,
- Vinylalkohol,
- Vinylethern
- und Mischungen dieser Monomere
ausgewählt ist, handelt.

13. Verfahren nach einem der Ansprüche 1 bis 12, bei dem der Gehalt an Epoxidfunktion in dem Ausgangspolymer mindestens 0,1 mol pro 100 mol Monomereinheiten, aus denen das Ausgangspolymer aufgebaut ist, beträgt.

14. Polymer mit mindestens einer seitenständigen Hydroxyarylgruppe, das durch das Syntheseverfahren gemäß einem der Ansprüche 1 bis 13 erhältlich ist.

15. Polymer nach Anspruch 14, wobei es sich bei dem Polymer um ein Elastomer, vorzugsweise ein Dienelastomer, handelt.

16. Kautschukzusammensetzung auf Basis von mindestens einem verstärkenden Füllstoff und einem Polymer gemäß einem der Ansprüche 14 bis 15.

17. Reifen, wobei eines seiner Aufbauelemente eine Kautschukzusammensetzung nach Anspruch 16 umfasst.

## Claims

1. Process for the synthesis of a polymer bearing at least one pendant hydroxyaryl group, which process comprises the reaction of a starting polymer bearing at least one epoxide functional group with a nucleophilic compound simultaneously bearing the hydroxyaryl group and bearing a nucleophilic functional group selected from the group consisting of the phosphonic acid functional group and its ionic form.

2. Process according to Claim 1, in which the hydroxyaryl group is an aryl group which bears two hydroxyl functional groups directly bonded to the benzene ring, preferably vicinal functional groups.

3. Process according to Claim 1 or 2, in which the nucleophilic functional group is the phosphonic monoacid functional group, preferably the -P(O)(OR)(OH) group, R being a carbon-based group.

4. Process according to any one of Claims 1 to 3, in which the nucleophilic compound corresponds to the following formula (I):
A-B-X (I)
in which:
A represents a nucleophilic functional group selected from the group consisting of the phosphonic acid functional group and its ionic form,
B is a "spacer" representing an atom or a group of atoms forming a connection between A and X,
X represents an aryl group bearing from 1 to 5 hydroxyl functional groups directly bonded to the benzene ring.

5. Process according to Claim 4, in which X in the formula (I) represents : 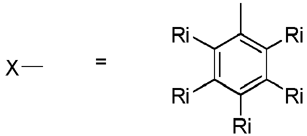 in which the Ri groups, which are identical or different, represent a hydrogen atom or a hydroxyl function, at least one of the Ri groups representing a hydroxyl function, preferably two Ri groups each represent a hydroxyl function, the other Ri groups each representing a hydrogen atom.

6. Process according to Claim 5, in which X in the formula (I) represents:

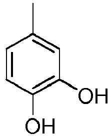

7. Process according to any one of Claims 1 to 6, in which the two carbon atoms of the epoxide functional group are in the main chain of the starting polymer.

8. Process according to Claim 7, in which the starting polymer contains 1,4-diene units, a portion of which is epoxidized.

9. Process according to Claim 8, in which the starting polymer containing 1,4-diene units, a portion of which is epoxidized, results from the epoxidation of a polymer selected from the group of diene polymers consisting of polybutadienes, polyisoprenes, 1,3-butadiene copolymers, isoprene copolymers and the mixtures of these polymers.

10. Process according to either one of Claims 1 to 6, in which the epoxide functional group is pendant.

11. Process according to Claim 10, in which the starting polymer is a polymer at least of a first monomer bearing the epoxide functional group.

12. Process according to Claim 11, in which the starting polymer is a polymer at least of a first monomer bearing the epoxide functional group and of a second monomer, preferably a vinyl monomer chosen from:
- ethylene,
- α-olefins,
- (meth)acrylonitrile,
- (meth)acrylates,
- vinyl esters of carboxylic acids,
- vinyl alcohol,
- vinyl ethers,
- and the mixtures of these monomers.

13. Process according to any one of Claims 1 to 12, in which the content of epoxide functional group in the starting polymer is at least 0.1 mol per 100 mol of monomer units constituting the starting polymer.

14. Polymer bearing at least one pendant hydroxyaryl group capable of being obtained by the synthesis process defined according to any one of Claims 1 to 13.

15. Polymer according to Claim 14, which polymer is an elastomer, preferably a diene elastomer.

16. Rubber composition based at least on a reinforcing filler and on a polymer defined according to either one of Claims 14 and 15.

17. Tyre, one of its constituent elements of which comprises a rubber composition according to Claim 16.
